**Europäisches Patentamt**

**European Patent Office**

**Office européen des brevets**

(19)

(11) **EP 1 311 057 A1**

(12) **EUROPEAN PATENT APPLICATION**

(43) Date of publication:
**14.05.2003 Bulletin 2003/20**

(51) Int Cl.⁷: **H02M 5/27**

(21) Application number: **01830688.6**

(22) Date of filing: **08.11.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventors:<br>• **Calvini, Marco**<br>  **16143 Genova (IT)**<br>• **Matteini, Marco**<br>  **47900 Rimini (IT)** |
| (71) Applicants:<br>• **Phase Motion Control S.r.l.**<br>  **16141 Genova (IT)**<br>• **IRCI-International Rectifier Corporation Italiana Spa**<br>  **10071 Borgaro Torinese (TO) (IT)** | (74) Representative: **Monti, Umberto**<br>  **Via Washington 48**<br>  **20146 Milano (IT)** |

(54) **Control method for a three-phase matrix converter**

(57)    A new control method for three-phase to three-phase matrix converter is disclosed in which an Space Vector Modulation (SVM) control technique is used to represents the three-phase input currents and output line-to-line voltage as space vectors, to select the matrix converter bi-directional switches configurations to be applied and to calculate the correspondent on-time duration. Once the SVM has carried out these tasks, the on-time duration of the selected matrix converter active and zero configurations are transformed into the corresponding on-time duration of the 9 single bi-directional switches.

**Fig. 1**

**EP 1 311 057 A1**

**Description**

The present invention relates to a novel control method for operating a three-phase to three-phase matrix converter.

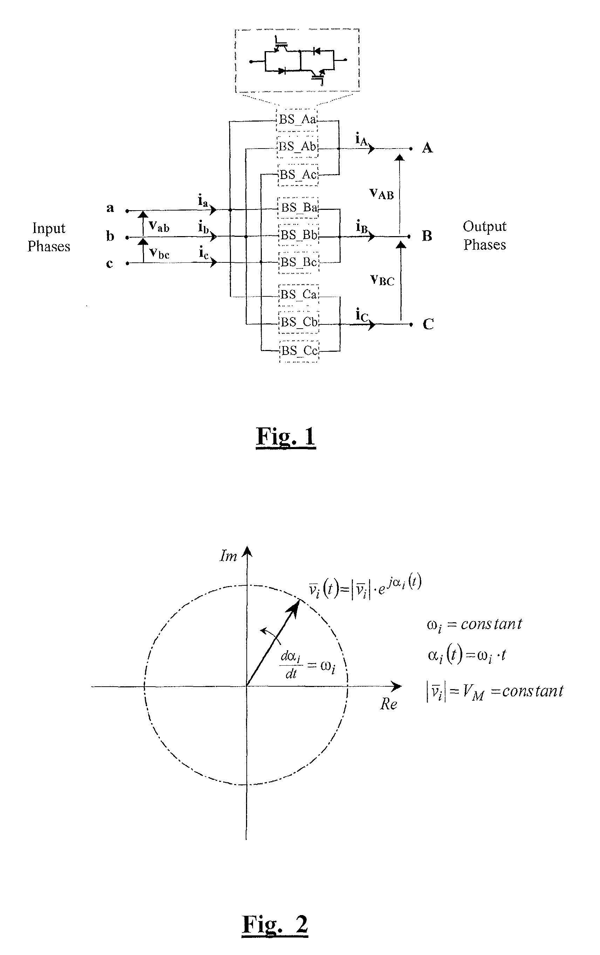

A three-phase to three-phase matrix converter as generally and schematically shown in Fig. 1 comprises a three-phase input system with three input lines a, b, and c with associated voltages vab, vbc and vca, a three-phase output system with three output lines A, B and C with associated voltages VAB, VBC and VCA and an array or matrix of nine bi-directional switches that can be controlled so that any output phase is connected to any input phase. Such bi-directional switches, one being schematically shown in the enlarged detail of Fig. 1, are named in accordance with the input-output phase the can be connected together when they are closed, such as BS_Aa, BS_Ab, .. BS_Cc. The phase currents are indicated with ia, ib and ic for the input system and with IA, IB and IC for the output system. In Fig. 1, the bi-directional switches are implemented by two anti-paralleled unidirectional switches with self-turn-off capability in common collector configuration and two fast recovery diodes.

The matrix converter topology was originally presented in 1976 by L. Gyugyi and B.R. Pelly in the paper "Static Power Frequency Changers. Theory, performance and applications," ISBN 0-471-678000-7, 442 pages, John Wiley & Sons, USA, 1976 as an unrestricted frequency changer. Although the proposed control scheme had better performance than naturally commutated cycloconverters it still had significant output voltage limitations and serious waveforms distortion.

In 1980 M. Venturini, in "A new sine wave in, sine wave out, conversion technique eliminates reactive elements", Proceedings of Powercon 7, San Diego, CA, 1980, pp. E3-1-E3-15 proposed an alternative high switching frequency control algorithm which was more effective than traditional control techniques. This conversion technique still had an output voltage limitation equal to half of the input voltage and restriction in the input power factor control. A further improved control algorithm was subsequently proposed by Venturini and A. Alesina that raised the maximum input-output voltage transfer ratio to 0.867, which was demonstrated to be the theoretical limit under the constraint of sinusoidal input and output waveforms, and that provided for input power factor control and compensation of input voltages distortion. This technique was disclosed in "Analysis and Design of Optimum-Amplitude Nine-Switch Direct AC-AC Converters", IEEE Transactions on Power Electronics, Vol. 4, no. 1, pp. 101-112, January 1989

On the other hand, in 1989 a control method based on a space vector modulation for a matrix converter was proposed by Huber-Borojevic in "Space Vector Modulator for Forced Commutated Cycloconverters" Proceedings of PESC'89, pp. 871-876, 1989. This technique was based on a space vector representation of the input and output currents and voltages and considered the matrix converter as a two stage transformation converter, namely a rectification stage which provides a constant imaginary DC-link and an inverter stage which produces the three phase target voltages. In this way a so called "indirect" space vector modulation of input currents and output voltages was carried out. In the subsequent paper "Space vector modulation with unity input power factor for forced commutated cycloconverters", Conference Records of IEEE Industry Applications Society Annual Meeting, 1991, Part I, pp. 1032-1041, Huber and Borojevic proposed an improved control algorithm that allowed for input power factor control and compensation of input voltages distortion. This algorithm represented an improvement with respect to the Venturini's one, either from an implementation point of view or from the viewpoint of a better comprehension of the physical. From now on, this control algorithm will be named "indirect SVM" method.

In the paper "Space vector control of matrix converters with unity input power factor and sinusoidal input/ output waveforms," Proceedings of IEE-EPE'93, Vol. 7, pp. 170-175, 1993, D. Casadei, G. Grandi, G. Serra, A. Tani proposed another technique for a matrix converter. This control method based on a "direct" space vector modulation differs from the Indirect-SVM because no imaginary DC-link is considered and the on-time durations of the permitted matrix converter switches combinations are derived under the assumption of a direct power conversion process. Hence, the Direct-SVM control method definitely represents an improvement with respect to Indirect-SVM in term of physical adherence to and immediate comprehension of the power conversion process. Moreover the control of the input power factor and the compensation of input voltages distortion can be easily carried out, without requiring for additional calculations.

This latter technique or Direct-SVM (in the following simply SVM) will be illustrated with more detail in the following.

The SVM control algorithm is based on a space vector representation of the three-phase input and output quantities of a matrix converter. In general, it is always possible to represent a three-phase system by means of a rotating space vector. With reference to the matrix converter and relevant symbols shown in Fig.1, it is possible to define the input line-to-line space vector the following expression space vectors:

$$\overline{v}_i = \frac{2}{3}\left( v_{ab} + v_{bc}\; e^{j\frac{2\pi}{3}} + v_{ca}\; e^{j\frac{4\pi}{3}} \right) = v_i(t)\, e^{j\alpha_i(t)} \qquad\qquad (1)$$

The vector $v_i$ is the input line-to-line voltage space vector where the subscript "i" is for input whereas "o" is for output and do not change. In accordance with its definition, space vector $v_i$ already contains the instant values of the 3 line-to-line voltages . The same applies to the other quantities of the three phase system.

In the above expression (1) $v_i(t)$, $v_o(t)$, $i_i(t)$ and $i_o(t)$ are the time dependent magnitudes of the space vector while $\alpha_i(t)$, $\alpha_o(t)$, $\beta_i(t)$ and $\beta_o(t)$ are the corresponding time dependent phase angles. Likewise, space vectors are defined for the output line-to-line voltages and the input and output line currents. With $v_o(t)$, $i_i(t)$, $i_o(t)$ and $\alpha_o(t)$, $\beta_i(t)$, $\beta_o(t)$ are respectively indicated the magnitudes and the phase angles of these space vectors.

Making the assumption of sinusoidal and balanced three-phase systems the magnitude as well as the rotating speed of the space vectors become constant, as it is shown in Fig.2 for the input line-to-line voltage space vector.

Now, these four space vectors can be defined for any matrix converter switches configuration (also simply "configuration" in the following). But not all the possible configurations that a matrix converter can assume can be usefully employed. Taking into account that the converter is generally supplied at the input by a voltage source and it feeds at the output an inductive load, two rules have to be always respected:

   i) the input phases should never be short-circuited;
   ii) the output current should never be interrupted.

Under these constraints it can be verified that in a three-phase to three-phase matrix converter only 27 different switches configurations are permitted. These 27 switches configurations are listed in the following Table.

Table I

| Switches Configurations | A | B | C | $v_{AB}$ | $v_{BC}$ | $v_{CA}$ | $i_a$ | $i_b$ | $i_c$ | $e_o$ | $\alpha_o$ | $i_i$ | $\beta_i$ |
|---|---|---|---|---|---|---|---|---|---|---|---|---|---|
| +1 | a | b | b | $v_{ab}$ | 0 | $-v_{ab}$ | $i_A$ | $-i_A$ | 0 | $\frac{2I}{\sqrt{3}}$ $v_{ab}$ | $\pi/6$ | $\frac{2I}{\sqrt{3}}$ $i_A$ | $-\pi/6$ |
| -1 | b | a | a | $-v_{ab}$ | 0 | $v_{ab}$ | $-i_A$ | $i_A$ | 0 | $\frac{-2I}{\sqrt{3}}$ $v_{ab}$ | $\pi/6$ | $\frac{-2I}{\sqrt{3}}$ $i_A$ | $-\pi/6$ |
| +2 | b | c | c | $v_{bc}$ | 0 | $-v_{bc}$ | 0 | $i_A$ | $-i_A$ | $\frac{2I}{\sqrt{3}}$ $v_{bc}$ | $\pi/6$ | $\frac{2I}{\sqrt{3}}$ $i_A$ | $\pi/2$ |
| -2 | c | b | b | $-v_{bc}$ | 0 | $v_{bc}$ | 0 | $-i_A$ | $i_A$ | $\frac{-2I}{\sqrt{3}}$ $v_{bc}$ | $\pi/6$ | $\frac{-2I}{\sqrt{3}}$ $i_A$ | $\pi/2$ |
| +3 | c | a | a | $v_{ca}$ | 0 | $-v_{ca}$ | $-i_A$ | 0 | $i_A$ | $\frac{2I}{\sqrt{3}}$ $v_{ca}$ | $\pi/6$ | $\frac{2I}{\sqrt{3}}$ $i_A$ | $7\pi/6$ |
| -3 | a | c | c | $-v_{ca}$ | 0 | $v_{ca}$ | $i_A$ | 0 | $-i_A$ | $\frac{-2I}{\sqrt{3}}$ $v_{ca}$ | $\pi/6$ | $\frac{-2I}{\sqrt{3}}$ $i_A$ | $7\pi/6$ |
| +4 | b | a | b | $-v_{ab}$ | $v_{ab}$ | 0 | $i_B$ | $-i_B$ | 0 | $\frac{2I}{\sqrt{3}}$ $v_{ab}$ | $5\pi/3$ | $\frac{2I}{\sqrt{3}}$ $i_B$ | $-\pi/6$ |
| -4 | a | b | a | $v_{ab}$ | $-v_{ab}$ | 0 | $-i_B$ | $i_B$ | 0 | $\frac{-2I}{\sqrt{3}}$ $v_{ab}$ | $5\pi/3$ | $\frac{-2I}{\sqrt{3}}$ $i_B$ | $-\pi/6$ |

Table I   (continued)

| Switches Configurations | A | B | C | $v_{AB}$ | $v_{BC}$ | $v_{CA}$ | $i_a$ | $i_b$ | $i_c$ | $e_o$ | $\alpha_o$ | $i_i$ | $\beta_i$ |
|---|---|---|---|---|---|---|---|---|---|---|---|---|---|
| +5 | c | b | c | $-v_{bc}$ | $v_{bc}$ | 0 | 0 | $i_B$ | $-i_B$ | $\frac{2I}{\sqrt{3}}v_{bc}$ | $5\pi/3$ | $\frac{2I}{\sqrt{3}}i_B$ | $\pi/2$ |
| -5 | b | c | b | $v_{bc}$ | $-v_{bc}$ | 0 | 0 | $-i_B$ | $i_B$ | $\frac{-2I}{\sqrt{3}}v_{bc}$ | $5\pi/3$ | $\frac{-2I}{\sqrt{3}}i_B$ | $\pi/2$ |
| +6 | a | c | a | $-v_{ca}$ | $v_{ca}$ | 0 | $-i_B$ | 0 | $i_B$ | $\frac{2I}{\sqrt{3}}v_{ca}$ | $5\pi/3$ | $\frac{2I}{\sqrt{3}}i_B$ | $7\pi/6$ |
| -6 | c | a | c | $v_{ca}$ | $-v_{ca}$ | 0 | $i_B$ | 0 | $-i_B$ | $\frac{-2I}{\sqrt{3}}v_{ca}$ | $5\pi/3$ | $\frac{-2I}{\sqrt{3}}i_B$ | $7\pi/6$ |
| +7 | b | b | a | 0 | $-v_{ab}$ | $v_{ab}$ | $i_C$ | $-i_C$ | 0 | $\frac{2I}{\sqrt{3}}v_{ab}$ | $3\pi/2$ | $\frac{2I}{\sqrt{3}}i_C$ | $-\pi/6$ |
| -7 | a | a | b | 0 | $v_{ab}$ | $-v_{ab}$ | $-i_C$ | $i_C$ | 0 | $\frac{-2I}{\sqrt{3}}v_{ab}$ | $3\pi/2$ | $\frac{-2I}{\sqrt{3}}i_C$ | $-\pi/6$ |
| +8 | c | c | b | 0 | $-v_{bc}$ | $v_{bc}$ | 0 | $i_C$ | $-i_C$ | $\frac{2I}{\sqrt{3}}v_{bc}$ | $3\pi/2$ | $\frac{2I}{\sqrt{3}}i_C$ | $\pi/2$ |
| -8 | b | b | c | 0 | $v_{bc}$ | $-v_{bc}$ | 0 | $-i_C$ | $i_C$ | $\frac{-2I}{\sqrt{3}}v_{bc}$ | $3\pi/2$ | $\frac{-2I}{\sqrt{3}}i_C$ | $\pi/2$ |
| +9 | a | a | c | 0 | $-v_{ca}$ | $v_{ca}$ | $-i_C$ | 0 | $i_C$ | $\frac{2I}{\sqrt{3}}v_{ca}$ | $3\pi/2$ | $\frac{2I}{\sqrt{3}}i_C$ | $7\pi/6$ |
| -9 | c | c | a | 0 | $v_{ca}$ | $-v_{ca}$ | $i_C$ | 0 | $-i_C$ | $\frac{-2I}{\sqrt{3}}v_{ca}$ | $3\pi/2$ | $\frac{-2I}{\sqrt{3}}i_C$ | $7\pi/6$ |
| $0_a$ | a | a | a | 0 | 0 | 0 | 0 | 0 | 0 | 0 | -- | 0 | -- |
| $0_b$ | b | b | b | 0 | 0 | 0 | 0 | 0 | 0 | 0 | -- | 0 | -- |
| $0_c$ | c | c | c | 0 | 0 | 0 | 0 | 0 | 0 | 0 | -- | 0 | -- |
| --- | a | b | c | $v_{ab}$ | $v_{bc}$ | $v_{ca}$ | $i_A$ | $i_B$ | $i_C$ | $v_i$ | $\alpha_i$ | $i_o$ | $\beta_o$ |
| --- | a | c | b | $-v_{ca}$ | $-v_{bc}$ | $-v_{ab}$ | $i_A$ | $i_C$ | $i_B$ | $-v_i$ | $\alpha_i+4\pi/3$ | $i_o$ | $-\beta_o$ |
| --- | b | a | c | $-v_{ab}$ | $-v_{ca}$ | $-v_{bc}$ | $i_B$ | $i_A$ | $i_C$ | $-v_i$ | $-\alpha_i$ | $i_o$ | $-\beta_o+2\pi/3$ |
| --- | b | c | a | $v_{bc}$ | $v_{ca}$ | $v_{ab}$ | $i_C$ | $i_A$ | $i_B$ | $v_i$ | $\alpha_i+4\pi/3$ | $i_o$ | $\beta_o+2\pi/3$ |
| --- | c | a | b | $v_{ca}$ | $v_{ab}$ | $v_{bc}$ | $i_B$ | $i_C$ | $i_A$ | $v_i$ | $\alpha_t+2\pi/3$ | $i_o$ | $\beta_o+4\pi/3$ |
| --- | c | b | a | $-v_{bc}$ | $-v_{ab}$ | $-v_{ca}$ | $i_C$ | $i_B$ | $i_A$ | $-v_i$ | $-\alpha_i+2\pi/3$ | $i_o$ | $-\beta_o+4\pi/3$ |

For each of them the resulting output line-to-line voltages are given as function of the input line-to-line voltages, which are impress by the grid, as well as the input converter currents are expressed as function of the output line currents, which are impressed by the load. Accordingly to the corresponding output line-to-line voltage and input current space vectors, these configurations can be classified as "active", "zero" and "synchronous" configurations.

The active configurations are 18 and correspond to the first 18 configurations in the Table I. They determine six prefixed positions of the output line-to-line voltage space vector $\bar{v}_o$ which are not dependent on the input line-to-line voltage space vector phase angle $\alpha_i(t)$ and six prefixed positions of the input current space vector $\bar{i}_i$ which are not dependent on the output line current space vector angle $\beta_o(t)$ (see Table I). The active configurations have also the common feature of two output lines (or phases) connected to the same input line (or phase) as it can be seen in Table I, by the second column starting from the left hand side.

The zero configuration are 3. In zero configurations the three output lines are connected to the same input phase, so that they determine zero output line-to-line voltage and input current space vectors.

The synchronous configurations are 6 and are the final six configurations in Table I. In synchronous configuration the three output phases are connected to three different input phases.
These configurations determine output line-to-line voltage space vector $\bar{v}_o$ having a phase angle $\alpha_o(t)$ which is dependent on the input line-to-line voltage space vector phase angle $\alpha_i(t)$. Likewise, the input current space vector $\bar{i}_i$ has a phase angle $\beta_i(t)$ which is related to the output line current space vector phase angle $\beta_o(t)$.

The aim of the SVM control algorithm is to generate the desired or reference output line-to-line space vector $\bar{v}_o^*$ and the input line converter current space vector phase angle $\beta_i^*$ which set the input power factor. In order to achieve this aim, only the active and zero configurations are used by the algorithm.

During each cycle or base modulation period, 4 active and 1 zero configurations are used to generate the desired space vectors. In order to select the proper configurations to be used and to calculate their correspondent on-time durations, the SVM algorithm requires the measurement of two input line-to-line voltages, the knowledge of the reference output line-to-line voltage space vector $\bar{v}_o^*$ and the knowledge of the reference phase angle $\beta_i^*$ for the reference input current space vector $\bar{v}_i$.
It is worth noting that although we talk of a reference input line current space vector $\bar{v}_i^*$, only the phase angle of this space vector can be set to a reference value, being its magnitude automatically defined by the power delivered to the load and by the instantaneous equality of the power at the input and at the output of the matrix converter. In fact, it has to bear in mind that matrix converter does not have any energy storage components.

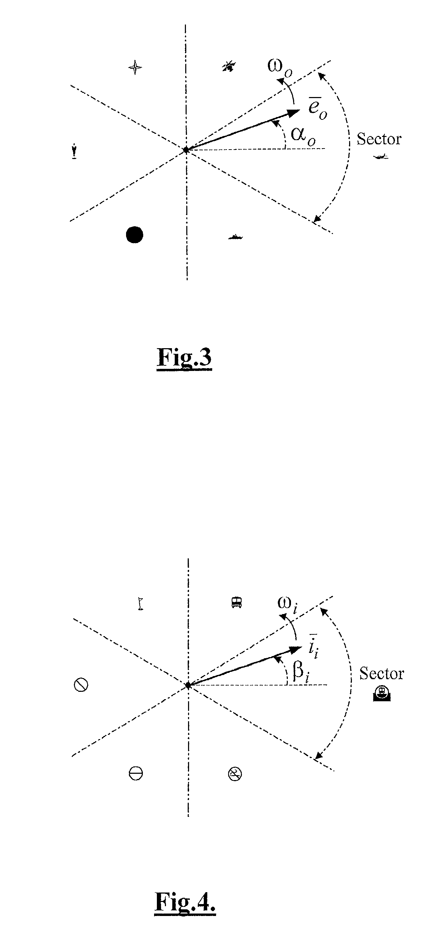

The active configurations to be used are selected accordingly to a selection table whose input quantities are the numbers Kv and Ki of the sectors in which the reference output line-to-line voltage space vector $\bar{v}_o^*$ and the reference input current space vector $\bar{v}_i^*$ are respectively in. In Fig.3 and Fig.4 it is shown how the Gauss plane is divided in sectors for these two space vectors. The configurations selection table is quoted in the following Table II illustrating the matrix converter configurations selection table as a function of the sector numbers Ki and Kv

Table II.

| Ki / Kv | 😀 | | | | 🚌 | | | | ⌇ | | | | ⊘ | | | | ⊖ | | | | ⊗ | | | |
|---|---|---|---|---|---|---|---|---|---|---|---|---|---|---|---|---|---|---|---|---|---|---|---|---|
| | -3 | +1 | +6 | -4 | +2 | -3 | -5 | +6 | -1 | +2 | +4 | -5 | +3 | -1 | -6 | +4 | -2 | +3 | +5 | -6 | +1 | -2 | -4 | +5 |
| | +9 | -7 | -3 | +1 | -8 | +5 | +2 | -3 | +7 | -8 | -1 | +2 | -9 | +7 | +3 | -1 | +8 | -5 | -2 | +3 | -7 | +8 | +1 | -2 |
| | -6 | +4 | +9 | -7 | +5 | -6 | -8 | +9 | -4 | +5 | +7 | -8 | +6 | -4 | -9 | +7 | -5 | +6 | +8 | -9 | +4 | -5 | -7 | +8 |
| | +3 | -1 | -6 | +4 | -2 | +3 | +5 | -6 | +1 | -2 | -4 | +5 | -3 | +1 | +6 | -4 | +2 | -3 | -5 | +6 | -1 | +2 | +4 | -5 |
| ● | -9 | +7 | +3 | -1 | +8 | -5 | -2 | +3 | -7 | +8 | +1 | -2 | +9 | -7 | -3 | +1 | -8 | +5 | +2 | -3 | +7 | -8 | -1 | +2 |
| | +6 | -4 | -9 | +7 | -5 | +6 | +8 | -9 | +4 | -5 | -7 | +8 | -6 | +4 | +9 | -7 | +5 | -6 | -8 | +9 | -4 | +5 | +7 | -8 |
| | I | II | III | IV | I | II | III | IV | I | II | III | IV | I | II | III | IV | I | II | III | IV | I | II | III | IV |

As far as the zero configuration/s selection is concerned, it can obey to different criteria. A frequently used criteria is to choose the zero configuration which minimises, within a base modulation period, the overall number of devices switching.

The on-time durations $T_I$, $T_{II}$, $T_{III}$, $T_{IV}$ of the chosen active configurations are calculated using four non-computationally heavy expressions.

All the 4 on-time durations are proportional to the constant $2/\sqrt{3}$, are proportional to the ratio between the instantaneous value of the input line-to-line voltage and reference output line-to-line voltage space vectors magnitude, are proportional to the multiplication of two cosine functions of four different angles dependent on the phase angles of the reference input current and output line-to-line voltage space vectors with respect to the bisecting line of each space vector relevant sector, are proportional to the base modulation period or cycle period $T_C$, and are finally inversely proportional to the reference input power factor value.

In order to calculate the on-time durations $T_I$, $T_{II}$, $T_{III}$, $T_{IV}$ of the chosen active configurations, the following expressions are used.

$$d^I = \frac{2}{\sqrt{3}} \frac{v_o}{v_I} \frac{cos\left(\tilde{\beta}_i + \pi/3\right)cos\left(\tilde{\alpha}_o - \pi/3\right)}{cos\,\varphi_i} \qquad (2)$$

$$d^{II} = \frac{2}{\sqrt{3}} \frac{v_o}{v_i} \frac{cos\left(\tilde{\beta}_i - \pi/3\right)cos\left(\tilde{\alpha}_o - \pi/3\right)}{cos\,\varphi_i} \qquad (3)$$

$$d^{III} = \frac{2}{\sqrt{3}} \frac{v_o}{v_i} \frac{cos\left(\tilde{\beta}_i + \pi/3\right)cos\left(\tilde{\alpha}_o + \pi/3\right)}{cos\,\varphi_i} \qquad (4)$$

$$d^{IV} = \frac{2}{\sqrt{3}} \frac{v_o}{v_I} \frac{cos\left(\tilde{\beta}_i - \pi/3\right)cos\left(\tilde{\alpha}_o + \pi/3\right)}{cos\,\varphi_i} \qquad (5)$$

where $d^I$, $d^{II}$, $d^{III}$ and $d^{IV}$ are the configurations duty cycles and they are defined as

$$d^I = \frac{T_I}{T_C};\ d^{II} = \frac{T_{II}}{T_C};\ d^{III} = \frac{T_{III}}{T_C};\ d^{IV}\,\frac{T_{IV}}{T_C}; \qquad (6)$$

with $T_C$ base modulation period or cycle period. Moreover

$cos\,\varphi_i$  represents the reference input power factor: if a unity input power factor is desired, $cos\,\varphi_I$ must be set to 1;

$v_o$  is the instantaneous, calculated at any base modulation period, magnitude of the reference output line-to-line voltage space vector to generate;

$v_I$  is the instantaneous, calculated at every base modulation period, magnitude of the input line-to-line voltage space vector. The two measured input line-to-line voltages are used to calculate it.

An important point worth noting is that in equations (2)-(5), the angles $\tilde{\beta}_i$ and $\tilde{\alpha}_o$ of the input cur-rent and output line-to-line voltage reference space vectors are referred to the bisecting line of the corresponding sector they are in ( see Figs.3-4.). As a consequence the following angle limits apply:

$$-\frac{\pi}{6} < \tilde{\alpha}_o < \frac{\pi}{6}, \qquad\qquad -\frac{\pi}{6} < \tilde{\beta}_i < \frac{\pi}{6}\ . \qquad (7)$$

For the feasibility of the control, the sum of the active configurations on-time durations must be lower than or equal to the base modulation period, that is

$$T_I + T_{II} + T_{III} + T_{IV} \leq T_C \tag{8}$$

When the sum is lower than $T_C$ a zero configuration is applied to complete the base modulation period. Its on-time duration $T_0$ is easily calculated by means of the following expression

$$T_0 = T_C - (T_I + T_{II} + T_{III} + T_{IV}) \tag{9}$$

At this point the SVM control method has been explained, since it has been shown how, at each base modulation period, the matrix converter switches configurations to be used are selected and the correspondent on-time durations are calculated accordingly to the control reference quantities.

The above discussed SVM control method has the drawback of a limited degree of freedom in choosing, within a base modulation period, the connection sequence of the output phases to the input phases, being the on-time durations referred to already stated switches combinations: the active and zero configurations.

In respect of the SVM method, the Venturini technique can be rather complex to be implemented in a real time control system when the power factor is not controlled to be kept at unitary value. Moreover the system cannot be easily modified.

It is therefore an object of the present invention to provide a control method for operating a three-phase to three-phase matrix converter that eliminates the above drawbacks of the prior art methods.

The control method of the invention aims to improve the harmonic spectrum of the input currents of the SVM control method and to reduce the switching losses of the bi-directional switches.

The invention achieves the above object through a control method as claimed in claim 1. Additional advantageous features are recited in the dependent claims.

An advantage of the control method of the present invention is that of preserving the immediate comprehension of the required power conversion process, the simplicity of the on-time duration expressions, the straightforward control of the input power factor and implementation of different modulation strategies.

An additional advantage is that of retaining a high degree of freedom in choosing the optimum switching commutation sequence accordingly to the application specific required criteria.

The invention will now be disclosed hereinbelow with reference to the accompanying drawings illustrating preferred but non limiting embodiments thereof, in which:

Fig. 1 is a schematic diagram of a three-phase to three-phase matrix converter circuit using bi-directional switches;

Fig. 2 shows the input line-to-line voltage space vector trajectory in the Gauss plane for a three-phase sinusoidal and balanced supply voltages system.

Fig. 3 illustrates a sector division of the Gauss plane for the matrix converter output line-to-line space vector $\bar{v}^*_{o^*}$;

Fig. 4 illustrates a sector division of the Gauss plane for the matrix converter input converter current space vector $\bar{v}^o_i$.

In accordance with the method of the present invention, the on-time duration of each single bi-directional switch of the matrix converter is calculated from the on-time durations of the active and zero configurations illustrated above for the SVM method,. This can be done easily by looking at the input phase each output phase is connected to, for any given active and zero configuration.

Moreover, two zero configurations, instead of one, are applied during each base modulation period: one at the beginning and one at the end. One zero configuration is that connecting the three output lines to the input phase at the lowest voltage; the other is that one connecting the three output lines to the input phase at the highest voltage.

These operations will be further illustrated by way of an example.

With reference to Table I for the configuration codification meaning, it is assumed that the SVM control algorithm has selected the following active configurations:

*abb* (I), *acc* (II), *aba* (III), *aca* (IV) and the corresponding on-time durations are $T_I$, $T_{II}$, $T_{III}$ and $T_{IV}$.

Accordingly to the invention, it is assumed that the two suitable zero configurations to be applied are:

*bbb* (0b) and *ccc* (0e)

where "b" stands for beginning and "e" stands for ending. It is also assumed that each zero configuration is applied for an equal time $T_0/2$, where $T_0$ is the time calculated using (12).

Then, the on-time duration for the bi-directional switches connected to output phase A, BS_Aa, BS_Ab, BS_Ac, are given by the following expressions:

$$T_{BS\_Aa} = T_I + T_{II} + T_{III} + T_{IV} \,;$$

$$T_{BS\_Ab} = T_0/2 \,;$$

$$T_{BS\_Ac} = T_0/2 \,;$$

The on-time duration for the bi-directional switches connected to output phase B, BS_Ba, BS_Bb, BS_Bc, are given by:

$$T_{BS\_Ba} = 0 \,;$$

$$T_{BS\_Bb} = T_I + T_{III} + T_0/2;$$

$$T_{BS\_Bc} = T_{II} + T_{IV} + T_0/2 \,;$$

The on-time duration for the bi-directional switches connected to output phase C, BS_Ca, BS_Cb, BS_Cc, are given by:

$$T_{BS\_Ca} = T_{III} + T_{IV} \,;$$

$$T_{BS\_Cb} = T_I + T_0/2 \,;$$

$$T_{BS\_Cc} = T_{II} + T_0/2 \,;$$

It can be verified that for any output phase the following result holds:

$$T_{BS\_Xa} + T_{BS\_Xb} + T_{BS\_Xc} = T_C \qquad \text{for } X = A, B, C$$

This is a rule that implicitly include the rules i) and ii) previously mentioned and hence it must always be respected.

At this stage the on-time durations of the 9 bi-directional switches of the matrix converter are available as it is the case in the Venturini method. This represents an advantage with respect to the SVM algorithm because disposing of the on-time duration of each bi-directional switch instead of the SVM active configurations, provides an higher degree of freedom in choosing, within a base modulation period, the connection sequence of the output phases to the input phases.

In accordance with a preferred embodiment of the invention, the proposed connection sequence applies to each output phase of a matrix converter. Such proposed connection sequence it is defined with reference to two adjacent base modulation periods that hereinafter are simply named "odd cycle" and "even" cycle.

The proposed connection sequence requires to know, at each base modulation period, which is the input phase with the highest voltage, hereinafter "maximum input phase", and which is the input phase with the lowest voltage, hereinafter "minimum input phase". The third input phase is named "intermediate input phase".

The proposed connection sequence provides that in the odd cycle the output phase is initially connected to the minimum input phase, then switched to the intermediate input phase (if required by the control) and finally connected to the maximum input phase.

In the even cycle the pattern to follow provides that the output phase is initially connected to the maximum input phase, then switched to the intermediate input phase (if required by the control) and finally connected to the minimum input phase.

The proposed connection sequence is shown in the following diagram

Although the invention has been illustrated with reference to preferred embodiments thereof, it is generally subjected to other applications and modifications falling within the scope of the invention, as it will be evident to the skilled of the art.

## Claims

1. A control method for operating a three-phase to three-phase matrix converter comprising:

   - a three-phase input system with three input lines (a, b, c);
   - a three-phase output system with three output lines (A, B, C);
   - an array or matrix of nine bi-directional switches (BS_Aa, BS_Ab, .. BS_Cc) that can be controlled to connect any output phase (a, b, c) to anyone of said input phases (A, B, C); said method comprising at each cycle period the steps of:

   - measuring two input line-to-line voltages in order to calculate the instantaneous value of the input line-to-line space vector magnitude $v_i$, to generate the reference phase angle ($\beta^*$) accordingly to the desired input power factor value and to calculate the sector Ki the input current space vector ($\overline{i_i}^*$) is in;
   - generating a reference output line-to-line voltage space vector ($\overline{v}^o$) in order to have its instantaneous magnitude $v_o$, its phase angle $\alpha_o$ and to calculate the sector Kv the space vector is in;
   - selecting by the following Table the active configurations of the nine bi-directional switches matrix to be applied within the current base modulation period;

TABLE

| Ki / Kv | ☺ | | | | 🚋 | | | | ⌠ | | | | ⊘ | | | | ⊖ | | | | ⊗ | | | |
|---|---|---|---|---|---|---|---|---|---|---|---|---|---|---|---|---|---|---|---|---|---|---|---|---|
| ⌇ | -3 | +1 | +6 | -4 | +2 | -3 | -5 | +6 | -1 | +2 | +4 | -5 | +3 | -1 | -6 | +4 | -2 | +3 | +5 | -6 | +1 | -2 | -4 | +5 |
| ✳ | +9 | -7 | -3 | +1 | -8 | +5 | +2 | -3 | +7 | -8 | -1 | +2 | -9 | +7 | +3 | -1 | +8 | -5 | -2 | +3 | -7 | +8 | +1 | -2 |
| ✛ | -6 | +4 | +9 | -7 | +5 | -6 | -8 | +9 | -4 | +5 | +7 | -8 | +6 | -4 | -9 | +7 | -5 | +6 | +8 | -9 | +4 | -5 | -7 | +8 |
| ⚡ | +3 | -1 | -6 | +4 | -2 | +3 | +5 | -6 | +1 | -2 | -4 | +5 | -3 | +1 | +6 | -4 | +2 | -3 | -5 | +6 | -1 | +2 | +4 | -5 |
| ● | -9 | +7 | +3 | -1 | +8 | -5 | -2 | +3 | -7 | +8 | +1 | -2 | +9 | -7 | -3 | +1 | -8 | +5 | +2 | -3 | +7 | -8 | -1 | +2 |
| ⌇ | +6 | -4 | -9 | +7 | -5 | +6 | +8 | -9 | +4 | -5 | -7 | +8 | -6 | +4 | +9 | -7 | +5 | -6 | -8 | +9 | -4 | +5 | +7 | -8 |
| | I | II | III | IV | I | II | III | IV | I | II | III | IV | I | II | III | IV | I | II | III | IV | I | II | III | IV |

   - calculating the phase angles $\tilde{\beta}_i$ and $\tilde{\alpha}_o$ on the basis of the knowledge of phase angle $\beta_i^*$, phase angle $\alpha_o$, and

the sectors number Ki, Kv;
- calculating the on-time durations $T_I$, $T_{II}$, $T_{III}$, $T_{IV}$ of the chosen active configurations, in accordance with the following expressions:

$$d^I = \frac{2}{\sqrt{3}} \frac{v_o}{v_i} \frac{\cos\left(\tilde{\beta}_i + \frac{\pi}{3}\right)\cos\left(\tilde{\alpha}_o - \frac{\pi}{3}\right)}{\cos\varphi_i} \qquad (2)$$

$$d^{II} = \frac{2}{\sqrt{3}} \frac{v_o}{v_I} \frac{\cos\left(\tilde{\beta}_i - \frac{\pi}{3}\right)\cos\left(\tilde{\alpha}_o - \frac{\pi}{3}\right)}{\cos\varphi_I} \qquad (3)$$

$$d^{III} = \frac{2}{\sqrt{3}} \frac{v_o}{v_i} \frac{\cos\left(\tilde{\beta}_i + \frac{\pi}{3}\right)\cos\left(\tilde{\alpha}_o + \frac{\pi}{3}\right)}{\cos\varphi_I} \qquad (4)$$

$$d^{IV} = \frac{2}{\sqrt{3}} \frac{v_o}{v_I} \frac{\cos\left(\tilde{\beta}_i - \frac{\pi}{3}\right)\cos\left(\tilde{\alpha}_o + \frac{\pi}{3}\right)}{\cos\varphi_i} \qquad (5)$$

where $d^I$, $d^{II}$, $d^{III}$ and $d^{IV}$ are the configurations duty cycles and they are defined as

$$d^I = \frac{T_I}{T_C};\ d^{II} = \frac{T_{II}}{T_C};\ d^{III} = \frac{T_{III}}{T_C};\ d^{IV} \frac{T_{IV}}{T_C}; \qquad (6)$$

and where:

$T_C$  is the base modulation period or cycle period;
$\cos\varphi_i$  represents the reference input power factor;
$v_o$  is the instantaneous, calculated at any base modulation period, magnitude of the reference output line-to-line voltage space vector to generate;
$v_i$  is the instantaneous, calculated at every base modulation period, magnitude of the input line-to-line voltage space vector;

- calculating the on-time durations $T_0$ which completes the cycle period or base modulation period in accordance with the following expression

$$T_0 = \left[1 - \left(d^I + d^{II} + d^{III} + d^{IV}\right)\right] \cdot T_C$$

said method being **characterised by** the following steps:

- selecting the two zero configurations to be applied for an equal time in the base modulation period, one at the beginning and one at the end thereof;
- calculating the on-time duration of each single bi-directional switch of the matrix converter from the on-time durations of the active and zero configurations.

2.  A method as claimed in claim 1, **characterised in that** one of said zero configuration is that connecting said three output lines (A, B, C) to the input phase at the lowest voltage; the other is that one connecting aid three output lines (a, b, c) to the input phase at the highest voltage.

3.  A method as claimed in claim 1 or 2, **characterised by** the additional step of applying said proposed connection sequence to each output phase of said matrix converter.

4.  A method as claimed in claim 1, **characterised in that** said connection sequence provides for two adjacent base modulation period, hereinafter an "odd cycle" and an "even" cycle, wherein
    in the odd cycle the following steps are carried out:

    -   connecting the output phase to the minimum input phase;
    -   switching to the intermediate input phase if required by the control;
    -   connecting said output phase to the maximum input phase;

    and in the even cycle the following steps are carried out:

    -   connecting the output phase to the maximum input phase;
    -   switching to the intermediate input phase if required by the control;
    -   connected said output phase to the minimum input phase.

5.  A method as claimed in claims 1 to 4, **characterised in that** at least one of said three-phase systems is sinusoidal and balanced.

**Fig. 1**

$$\bar{v}_i(t) = |\bar{v}_i| \cdot e^{j\alpha_i(t)}$$

$$\omega_i = constant$$

$$\alpha_i(t) = \omega_i \cdot t$$

$$|\bar{v}_i| = V_M = constant$$

$$\frac{d\alpha_i}{dt} = \omega_i$$

**Fig. 2**

**Fig.3**

**Fig.4.**

**European Patent Office**

# EUROPEAN SEARCH REPORT

Application Number

EP 01 83 0688

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | HUBER L ET AL: "SPACE VECTOR MODULATED THREE-PHASE TO THREE-PHASE MATRIX CONVERTER WITH INPUT POWER FACTOR CORRECTION" IEEE TRANSACTIONS ON INDUSTRY APPLICATIONS, IEEE INC. NEW YORK, US, vol. 31, no. 6, 1 November 1995 (1995-11-01), pages 1234-1246, XP000550007 ISSN: 0093-9994 * the whole document * | 1-5 | H02M5/27 |
| D,A | CASADEI D ET AL: "SPACE VECTOR CONTROL OF MATRIX CONVERTERS WITH UNITY INPUT POWER FACTOR AND SINUSOIDAL INPUT/OUTPUT WAVEFORMS" SYSTEM ENGINEERING. BRIGHTON, SEPT. 13 - 16, 1993, PROCEEDINGS OF THE EUROPEAN CONFERENCE ON POWER ELECTRONICS AND APPLICATIONS, LONDON, IEE, GB, vol. 7 CONF. 5, 13 September 1993 (1993-09-13), pages 170-175, XP000436184 * the whole document * | 1-5 | |
| A | US 5 949 672 A (BERNET STEFFEN) 7 September 1999 (1999-09-07) * column 3, line 65 – column 12, line 52; figures 1,3-7 * | 1-5 | |
| A | DE 100 16 230 A (SIEMENS AG) 25 October 2001 (2001-10-25) * the whole document * | 1-5 | |
| A | US 4 468 725 A (VENTURINI MARCO) 28 August 1984 (1984-08-28) * column 1, line 8 – column 8, line 37; figures 1-6 * | 1-5 | |

TECHNICAL FIELDS SEARCHED (Int.Cl.7)

H02M
H02P

The present search report has been drawn up for all claims

| Place of search | Date of completion of the search | Examiner |
|---|---|---|
| MUNICH | 12 March 2002 | Braccini, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 01 83 0688

This annex lists the patent family members relating to the patent documents cited in the above–mentioned European search report.
The members are as contained in the European Patent Office EDP file on
The European Patent Office is in no way liable for these particulars which are merely given for the purpose of information.

12-03-2002

| Patent document cited in search report | | Publication date | Patent family member(s) | | Publication date |
|---|---|---|---|---|---|
| US 5949672 | A | 07-09-1999 | DE | 19639773 A1 | 02-04-1998 |
| | | | CN | 1179643 A ,B | 22-04-1998 |
| | | | EP | 0833431 A2 | 01-04-1998 |
| | | | JP | 10191636 A | 21-07-1998 |
| DE 10016230 | A | 25-10-2001 | DE | 10016230 A1 | 25-10-2001 |
| | | | WO | 0176050 A1 | 11-10-2001 |
| US 4468725 | A | 28-08-1984 | NONE | | |

EPO FORM P0459

For more details about this annex : see Official Journal of the European Patent Office, No. 12/82